# EUROPEAN PATENT APPLICATION

(11) **EP 4 683 369 A1**
(43) Date of publication of application: **21.01.2026**
(21) Application number: 24784101.8
(22) Date of filing: 25.03.2024
(51) Int. Cl.: H04W 12/06

(54) **COMMUNICATION METHOD, APPARATUS AND SYSTEM**

(30) Priority: 07.04.2023 CN 202310401578
(71) Applicant: Huawei Technologies Co., Ltd., Shenzhen, Guangdong 518129 (CN)
(72) Inventor: LI, He, Shenzhen, Guangdong 518129 (CN); WU, Yizhuang, Shenzhen, Guangdong 518129 (CN); LI, Lun, Shenzhen, Guangdong 518129 (CN); WU, Rong, Shenzhen, Guangdong 518129 (CN)
(74) Representative: Epping - Hermann - Fischer
(86) International application number: PCT/CN2024/083669
(87) International publication number: WO 2024/208016

(57) **Abstract**

Embodiments of this application provide a communication method, apparatus, and system. The method includes: A relay terminal device sends first indication information to a remote terminal device, where the first indication information indicates the remote terminal device to avoid sending data, the remote terminal device is to be authenticated by a data network, and the data network is used to provide a service for the remote terminal device via the relay terminal device; and the relay terminal device sends a second message to the remote terminal device after receiving a first message, where the second message is used to trigger the remote terminal device to send the data, and the first message indicates that the authentication is not required, or the first message indicates that the authentication succeeds. In this way, the relay terminal device can promptly indicate the remote terminal device to start to send data, preventing the remote terminal device from being delayed in data transmission due to being notified of authentication to be performed by the data network. This helps improve communication efficiency of the remote terminal device.

## Description

This application claims priority to Chinese Patent Application No. 202310401578.7, filed with the China National Intellectual Property Administration on April 7, 2023 and entitled "COMMUNICATION METHOD, APPARATUS, AND SYSTEM", which is incorporated herein by reference in its entirety.

### TECHNICAL FIELD

This application relates to the communication field, and more specifically, to a communication method, apparatus, and system.

### BACKGROUND

A terminal device can access an operator network only after being authenticated by the operator network, and further access various services on a data network through the operator network. The authentication performed by the operator network on the terminal device may be referred to as primary authentication (primary authentication). With development in vertical industry and the internet of things, external data networks beyond the operator network may also authenticate a terminal device that accesses the data network. The authentication performed by the data networks on the terminal device may be referred to as secondary authentication (secondary authentication). In proximity-based services, remote terminal devices may communicate with the data network via relay terminal devices, to access the services on the data network. Considering the scenarios where these remote terminal devices might require secondary authentication, enhancing communication efficiency of the remote terminal devices becomes a problem to be addressed.

### SUMMARY

This application provides a communication method, apparatus, and system, to improve communication efficiency of a remote terminal device.

According to a first aspect, a communication method is provided. The method may be performed by a relay terminal device, or may be performed by a component (for example, a chip or a circuit) in the relay terminal device. This is not limited in this application. For ease of description, the following provides descriptions by using an example in which the method is performed by the relay terminal device.

The communication method includes: A relay terminal device sends first indication information to a remote terminal device, where the remote terminal device is pending authentication by a data network, the data network provides a service for the remote terminal device via the relay terminal device, the first indication information indicates the remote terminal device to avoid sending data, that is, avoid sending the data to the relay terminal device, that is, avoid sending the data on a link between the remote terminal device and the relay terminal device, that is, avoid sending the data to the data network. The first indication information may alternatively indicate that the remote terminal device is pending authentication by the data network, or indicate that a protocol data unit (protocol data unit, PDU) session is pending/suspending, or indicate that secondary authentication is to be performed on the PDU session. The PDU session is associated with the relay terminal device, and is used by the remote terminal device to send the data to the data network via the relay terminal device. After receiving a first message, the relay terminal device triggers the remote terminal device to send the data. Optionally, after receiving the first message, the relay terminal device sends a second message to the remote terminal device, where the second message is used to trigger the remote terminal device to send the data. The first message indicates that the authentication is not required, that is, the data network does not need to perform authentication on the remote terminal device, or the first message indicates that the authentication succeeds, or the first message indicates the relay terminal device to trigger the remote terminal device to send the data, or indicates that the remote terminal device may start to send the data. That the relay terminal device triggers the remote terminal device to send the data is that the remote terminal device is triggered to send the data to the relay terminal device, that is, the remote terminal device is triggered to send the data on the link between the remote terminal device and the relay terminal device, that is, the remote terminal device is triggered to send the data to the data network.

Based on the method, when the authentication of the data network is not required, or the authentication of the data network succeeds, the relay terminal device may indicate, in time, the remote terminal device to start to send the data, to prevent the remote terminal device from failing to send the data for a long time after receiving an indication for avoiding sending the data. This helps improve communication efficiency of the remote terminal device.

With reference to the first aspect, in some implementations of the first aspect, before the relay terminal device sends the first indication information to the remote terminal device, the method further includes: The relay terminal device determines that the remote terminal device is pending authentication by the data network. In this way, the relay terminal device can avoid a data sending failure caused by the remote terminal device pending authentication sending data before the authentication.

With reference to the first aspect, in some implementations of the first aspect, that the relay terminal device triggers the remote terminal device to send the data after receiving the first message includes: The relay terminal device sends second information to the remote terminal device after receiving the first message. Optionally, the second message includes the second information. When the first message indicates that the authentication is not required, the second information indicates that the authentication is not required; or when the first message indicates that the authentication succeeds, the second information indicates that the authentication succeeds. Alternatively, the second information may be used to trigger or indicate the remote terminal device to send the data, and the second information may be further used to trigger or indicate the remote terminal device to start to send the data. The explicit second information helps the remote terminal device quickly and accurately learn that the remote terminal device can start to send the data.

With reference to the first aspect, in some implementations of the first aspect, the first message includes third information, and the third information indicates that the authentication is not required, or the third information indicates that the authentication succeeds, or the third information indicates the relay terminal device to trigger the remote terminal device to send the data, and the third information may further indicate that the remote terminal device may start to send the data. The explicit third information helps the relay terminal device quickly and accurately learn that the remote terminal device may be triggered to send the data.

With reference to the first aspect, in some implementations of the first aspect, that the relay terminal device determines that the remote terminal device is pending authentication by the data network includes: The relay terminal device determines, based on a first service code associated with the data network, that the remote terminal device is pending authentication by the data network, where the first service code is marked as authentication required. In this way, the relay terminal device can quickly determine, based on the marked first service code, that the remote terminal device is pending authentication by the data network.

According to a second aspect, a communication method is provided. The method may be performed by a first network element, or may be performed by a component (for example, a chip or a circuit) in the first network element. This is not limited in this application. For ease of description, the following provides descriptions by using an example in which the method is performed by the first network element.

The communication method includes: A first network element determines that a data network does not need to perform authentication on a remote terminal device, where the data network is used to provide a service for the remote terminal device via a relay terminal device corresponding to the first network element; and the first network element sends a first message to the relay terminal device, where the first message is used to enable the relay terminal device to trigger the remote terminal device to send data, that is, trigger the remote terminal device to send the data to the relay terminal device, that is, trigger the remote terminal device to send the data on a link between the remote terminal device and the relay terminal device, that is, trigger the remote terminal device to send the data to the data network. Optionally, the first message indicates that the data network does not need to perform the authentication on the remote terminal device, that is, the first message indicates that the authentication of the data network is not required. The first message may also indicate the relay terminal device to trigger the remote terminal device to send the data, and the first message may further indicate that the remote terminal device may start to send the data. Based on the method, when the data network does not need to perform the authentication on the remote terminal device, the first network element may enable the remote terminal device to start to send the data in time, to improve communication efficiency of the remote terminal device.

With reference to the second aspect, in some implementations of the second aspect, the first message includes indication information, the indication information indicates that the authentication is not required, the indication information may also indicate the relay terminal device to trigger the remote terminal device to send the data, and the indication information may further indicate that the remote terminal device may start to send the data. The explicit indication information helps the relay terminal device quickly and accurately learn that the remote terminal device may be triggered to send the data.

According to a third aspect, a communication method is provided. The method may be performed by a remote terminal device, or may be performed by a component (for example, a chip or a circuit) in the remote terminal device. This is not limited in this application. For ease of description, the following provides descriptions by using an example in which the method is performed by the remote terminal device.

The communication method includes: A remote terminal device receives first indication information; the remote terminal device avoids, based on the first indication information, sending data, that is, avoids sending the data to a data network, that is, avoids sending the data to a relay terminal device, that is, avoids sending the data on a link between the remote terminal device and the relay terminal device, where the data network is used to provide a service for the remote terminal device via the relay terminal device; and the remote terminal device determines that a first condition is met, and then starts to send the data, that is, starts to send the data to the data network, that is, starts to send the data to the relay terminal device, that is, starts to send the data on the link between the remote terminal device and the relay terminal device. Based on the method, the remote terminal device may send the data in time when the condition is met, to prevent the remote terminal device from waiting indefinitely after being indicated to avoid sending the data, to improve communication efficiency of the remote terminal device.

With reference to the third aspect, in some implementations of the third aspect, that the remote terminal device determines that the first condition is met includes: The remote terminal device receives a second message. Optionally, the second message includes second information. The second message or the second information indicates that the data network does not need to perform authentication on the remote terminal device, or indicates that the data network has authenticated the remote terminal device, or the second message or the second information indicates the relay terminal device to trigger the remote terminal device to send the data, or the second message or the second information indicates that the remote terminal device may start to send the data. In this way, the remote terminal device starts to send the data upon an indication of the second message or the second information. This helps improve communication efficiency of the remote terminal device.

With reference to the third aspect, in some implementations of the third aspect, the first condition includes that duration between a current moment and a moment at which the remote terminal device receives the first indication information is greater than or equal to first duration. In this way, the remote terminal device starts to send the data after the first duration, to prevent the remote terminal device from waiting indefinitely after being notified that the authentication is to be performed, to improve communication efficiency of the remote terminal device.

With reference to the third aspect, in some implementations of the third aspect, the first condition further includes that authentication on the remote terminal device by the data network has not yet been performed after the remote terminal device receives the first indication information. This can avoid a data sending failure caused by a fact that the remote terminal device starts to send the data during authentication.

With reference to the third aspect, in some implementations of the third aspect, after the remote terminal device receives the first indication information, the method further includes: The remote terminal device starts a timer, where duration of the timer is equal to the first duration; and that the remote terminal device determines that the first condition is met includes: The remote terminal device determines that the timer expires. This helps the remote terminal device conveniently learn of when to start to send the data.

With reference to the third aspect, in some implementations of the third aspect, before the remote terminal device starts the timer, the method further includes: The remote terminal device determines whether the data network needs to perform authentication on the remote terminal device; and that the remote terminal device starts the timer includes: The remote terminal device starts the timer when determining that the data network needs to perform the authentication on the remote terminal device. This can prevent the remote terminal device from unnecessarily starting the timer, and reduce energy consumption of the remote terminal device.

With reference to the third aspect, in some implementations of the third aspect, that the remote terminal device determines whether the data network needs to perform authentication on the remote terminal device includes: The remote terminal device determines, based on configuration of the data network, whether the data network needs to perform the authentication on the remote terminal device. Optionally, when the configuration of the data network includes a credential used for the authentication, the remote terminal device determines that the data network needs to perform the authentication on the remote terminal device; or when the configuration of the data network does not include a credential used for the authentication, the remote terminal device determines that the data network does not need to perform the authentication on the remote terminal device.

With reference to the third aspect, in some implementations of the third aspect, that the authentication on the remote terminal device by the data network has not yet been performed after the remote terminal device receives the first indication information includes: after the remote terminal device receives the first indication information, an authentication-related message has not yet been received by the remote terminal device. In this way, the remote terminal device may quickly determine, if the message related to the authentication has not yet been received, that the authentication has not been performed.

With reference to the third aspect, in some implementations of the third aspect, the first condition includes: The configuration of the data network does not include a credential, and the credential is used by the data network to perform authentication on the remote terminal device. In this way, the remote terminal device can quickly determine that the authentication of the data network is not required, to start to send the data in time, so as to improve communication efficiency of the remote terminal device.

According to a fourth aspect, a communication method is provided, including: A relay terminal device sends first indication information to a remote terminal device, where the remote terminal device is pending authentication by a data network, and the data network is used to provide a service for the remote terminal device via the relay terminal device; the remote terminal device avoids, based on the first indication information, sending data; the relay terminal device sends a second message to the remote terminal device after receiving a first message, where the first message indicates that the authentication is not required, or the first message indicates that the authentication succeeds; and the remote terminal device sends the data based on the second message.

With reference to the fourth aspect, in some implementations of the fourth aspect, before the relay terminal device sends the first indication information to the remote terminal device, the method further includes: The relay terminal device determines that the remote terminal device is pending authentication by the data network.

With reference to the fourth aspect, in some implementations of the fourth aspect, the second message includes second information; and when the first message indicates that the authentication is not required, the second information indicates that the authentication is not required; or when the first message indicates that the authentication succeeds, the second information indicates that the authentication succeeds.

With reference to the fourth aspect, in some implementations of the fourth aspect, the first message includes third information, and the third information indicates that the authentication is not required, or the third information indicates that the authentication succeeds.

According to a fifth aspect, a communication apparatus is provided, and is configured to implement modules of the method according to any one of the implementations of the first aspect, the second aspect, and the third aspect.

According to a sixth aspect, an apparatus is provided, including a processor, a memory, and an optional transceiver. The memory is configured to store instructions, and when the instructions are executed by the processor, the processor is caused to implement the method according to any one of the implementations of the first aspect, the second aspect, and the third aspect, where the transceiver is configured to receive and/or send a signal.

According to a seventh aspect, a computer-readable storage medium is provided. The computer-readable storage medium stores instructions. When the instructions are run on a computer, the computer is caused to perform the method according to any one of the implementations of the first aspect, the second aspect, and the third aspect.

According to an eighth aspect, a computer program product including instructions is provided. When the instructions are run on a computer, the computer is caused to perform the method according to any one of the implementations of the first aspect, the second aspect, and the third aspect.

According to a ninth aspect, a data transmission system is provided, including a first apparatus and a second apparatus.

The first apparatus is configured to send first indication information to the second apparatus, where the second apparatus is to perform authentication of a data network, and the data network is used to provide a service for the second apparatus via the first apparatus; the second apparatus is configured to avoid, based on the first indication information, sending data; the first apparatus is further configured to send a second message to the second apparatus after receiving a first message, where the first message indicates that the authentication is not required, or the first message indicates that the authentication succeeds; and the second apparatus is further configured to send the data based on the second message.

With reference to the ninth aspect, in some implementations of the ninth aspect, before the sending the first indication information to the second apparatus, the first apparatus is further configured to determine that the second apparatus is pending authentication by the data network.

With reference to the ninth aspect, in some implementations of the ninth aspect, the second message includes second information; and when the first message indicates that the authentication is not required, the second information indicates that the authentication is not required; or when the first message indicates that the authentication succeeds, the second information indicates that the authentication succeeds.

With reference to the ninth aspect, in some implementations of the ninth aspect, the first message includes third information, and the third information indicates that the authentication succeeds, or the third information indicates that the authentication is not required.

According to a tenth aspect, a chip is provided. The chip includes a processor and a communication interface, and the processor reads, through the communication interface, instructions stored in a memory, to perform any one of the foregoing methods. Optionally, in an implementation, the chip may further include the memory. The memory stores the instructions, and the processor is configured to execute the instructions stored in the memory. When the instructions are executed, the processor is configured to perform any one of the foregoing methods.

### BRIEF DESCRIPTION OF DRAWINGS

FIG. 1 is a diagram of a proximity-based service network architecture 100 to which an embodiment of this application is applicable;
FIG. 2 is a diagram of a network architecture 200 to which an embodiment of this application is applicable;
FIG. 3 is a schematic flowchart of a communication method 300 according to an embodiment of this application;
FIG. 4 is a schematic flowchart of another communication method 400 according to an embodiment of this application;
FIG. 5 is a schematic flowchart of still another communication method 500 according to an embodiment of this application;
FIG. 6A and FIG. 6B are a schematic flowchart of yet another communication method 600 according to an embodiment of this application;
FIG. 7 is a block diagram of a communication apparatus 700 according to an embodiment of this application;
FIG. 8 is a block diagram of another communication apparatus 800 according to an embodiment of this application; and
FIG. 9 is a diagram of a chip system 900 according to an embodiment of this application.

### DESCRIPTION OF EMBODIMENTS

With rapid development of mobile communication, the widespread use of new data service types, for example, video services and virtual reality (virtual reality, VR)/augmented reality (augmented reality, AR), raise users' higher requirements on bandwidth. Device-to-device (Device-to-Device, D2D) communication allows direct communication between user equipments (User Equipments, UEs), and share spectrum resources with cell users under control of a cell network, effectively improving utilization of the spectrum resources. The D2D communication may be applied to cellular communication systems, for example, 4th generation (4th generation, 4G) communication systems or 5th generation (5th generation, 5G) communication systems. The D2D communication applied to the cellular communication systems is collectively referred to as proximity-based service (proximity-based service, ProSe) communication.

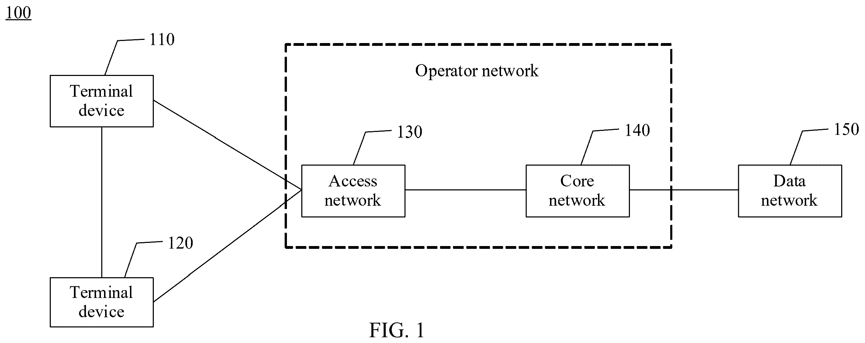

For example, FIG. 1 is a diagram of a ProSe network architecture 100 to which an embodiment of this application is applicable. The network architecture 100 includes at least two terminal devices (a terminal device 110 and a terminal device 120 are used as an example in FIG. 1), an operator network, and a data network (data network, DN) 150. The terminal device 110 and the terminal device 120 have a proximity-based service application (ProSe application) function. The terminal device 110 and the terminal device 120 can directly communicate with each other over a link established on an interface between the terminal device 110 and the terminal device 120. For example, the interface between the terminal device 110 and the terminal device 120 is referred to as a PC5 interface, and the terminal device 110 and the terminal device 120 can directly communicate with each other after a PC5 security link is established on the PC5 interface.

The operator network, also known as a public land mobile network (public land mobile network, PLMN), is a network established and operated by a government or an authorized operator to provide land mobile communication services for the public, primarily serving as a public network through which mobile network operators (mobile network operator, MNO) provide mobile broadband access services for users. For example, the operator network may be a network that meets requirements of 3rd generation partnership project (3rd generation partnership project, 3GPP) standards, which is abbreviated for a 3GPP network. The 3GPP network includes but is not limited to a 5G network, a 4G network, and another future communication system, for example, a 6th generation mobile communication network.

The operator network includes a (radio) access network ((radio) access network, (R)AN) 130 and a core network 140. The (R)AN 130 may communicate with one or more terminal devices in the network architecture 100. Unless otherwise specified, a network in the following description refers to the operator network.

The core network 140 may be a 5G core network (5G core network, 5GC), an evolved packet core (evolved packet core, EPC), or a core network in a future communication system. The core network 140 includes one or more network elements, for example, a session management function (session management function, SMF) network element, an access and mobility management function (access and mobility management function, AMF) network element, and a unified data management (unified data management, UDM) network element. The SMF network element is mainly configured for session management, user equipment internet protocol (internet protocol, IP) address allocation and management, selection and management of user plane functions, and termination of interfaces towards policy control and charging functions, downlink data notification, and the like. The AMF network element is mainly configured for mobility management and access management, responsible for transferring user policies and the like between user equipment and a policy control function (policy control function, PCF) network element, and may be configured to implement functions other than session management in functions of a mobility management entity (mobility management entity, MME), for example, lawful intercept and access authorization (or authentication). The UDM network element is configured for user equipment identification handling, and access authentication, registration, mobility management, and the like. For example, the UDM may retrieve subscription data of a terminal device based on a subscription permanent identifier (subscription permanent identifier, SUPI) of the terminal device.

The data network 150 is used to provide services for the terminal device 110 and the terminal device 120 through the access network 130 and the core network 140. Optionally, the data network is deployed by an operator, or may be deployed by an external third party.

It should be understood that an implementation form of the foregoing network element may be a physical entity in a hardware device, or may be a software instance run on dedicated hardware, or may be a virtualization function instantiated on a shared platform (for example, a cloud platform). In terms of form, the foregoing network elements may be independent devices, or may be integrated into a same device.

It should be further understood that the foregoing ProSe network architecture shown in FIG. 1 is merely an example for description, and the network architecture to which embodiments of this application are applicable is not limited thereto. Any network architecture that can implement functions of the network elements is applicable to embodiments of this application. In addition, the foregoing names are defined merely for ease of distinguishing between different functions, and should not constitute any limitation on this application. This application does not exclude a possibility of using other names in another future network. For example, in the 6G network, some or all of the network elements may still use terms in 5G, or may use other names.

In the ProSe network architecture, when the terminal device is located outside a network coverage range or signal quality between the terminal device and the access network is poor (for example, the signal quality is lower than a preset threshold), the terminal device may perform auxiliary communication via another terminal device. For example, in FIG. 1, the terminal device 110 may support communication between the terminal device 110 and the operator network through communication between the terminal device 110 and the terminal device 120 and communication between the terminal device 120 and the operator network, such that the terminal device 110 can obtain a service provided by the operator network. In this case, the terminal device 110 may be referred to as a remote terminal device, or may be referred to as remote UE (remote UE), and the terminal device 120 may be referred to as a relay terminal device, or may be referred to as relay UE (relay UE). The communication manner in which the remote terminal device communicates with the operator network via the relay terminal device may be referred to as UE-to-network relay (UE-to-network relay) communication.

To implement UE-to-network relay communication, a link needs to be established between the remote terminal device and the relay terminal device. In a link establishment process, the operator network may authenticate the remote terminal device via the relay terminal device. The remote terminal device can successfully establish the link to the relay terminal device only after being authenticated by the operator network, and access the operator network via the relay terminal device. In addition, the terminal device may further request to establish a protocol data unit (protocol data unit, PDU) session to communicate with the data network, to access various services on the data network. The authentication performed by the operator network on the terminal device may be referred to as primary authentication (primary authentication).

With development of vertical industry and the internet of things, a data network outside the operator network may also authenticate a terminal device that accesses the data network. The authentication performed by the data network on the terminal device may be referred to as secondary authentication (secondary authentication), also known as secondary authentication. In a UE-to-network relay (UE-to-network relay) communication scenario, if the remote terminal device is notified that the data network is to perform secondary authentication on the remote terminal device, the remote terminal device may not send data currently. In this case, how to improve communication efficiency of the remote terminal device is a problem that needs to be considered. Embodiments of this application provide a communication method, apparatus, and system, to improve communication efficiency of a remote terminal device.

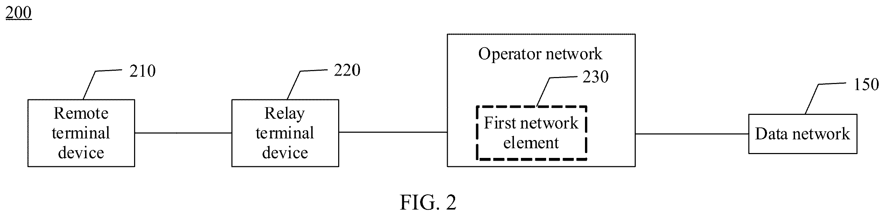

FIG. 2 is a diagram of a network architecture 200 to which an embodiment of this application is applicable. The network architecture 200 includes a remote terminal device 210, a relay terminal device 220, an operator network, and a data network 150. Optionally, the operator network further includes a first network element 230. The first network element 230 corresponds to the relay terminal device 220, and provides a service for the relay terminal device 220. The first network element 230 may be included in the access network 130, or may be included in the core network 140. For example, the first network element 230 is an SMF network element that manages a PDU session of the relay terminal device 220.

The remote terminal device 210 may be the terminal device 110 in FIG. 1, and the relay terminal device 220 may be the terminal device 120 in FIG. 1. The remote terminal device 210 and the relay terminal device 220 may be a device that has a wireless transceiver function or a chip or a chip system that can be disposed in the terminal device, or may be referred to as UE, an access terminal, a subscriber unit, a subscriber station, a mobile station, a mobile console, a remote station, a remote terminal, a mobile device, a user terminal, a terminal, a wireless communication device, a user agent, or a user apparatus. For example, the terminal device may be a mobile phone (mobile phone), a tablet computer, a notebook computer, a palmtop computer, a mobile Internet device, a wearable device, a VR device, an AR device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), another processing device connected to a wireless modem, and the like. The terminal device may be a terminal device in a 5G new radio (new radio, NR) network, a terminal device in a future evolved PLMN, a terminal device in a next generation network (for example, a 6th generation (6th generation, 6G) mobile communication network), or the like. This is not limited in embodiments of this application.

The remote terminal device and the relay terminal device have registered with the operator network, and have been authenticated by the operator network. The network authorizes the relay terminal device to provide a UE-to-network relay service, and the network authorizes the remote terminal device to receive the UE-to-network relay service. In addition, the remote terminal device and the relay terminal device discover each other, and successfully establish a link. After registering with the network or in a process of establishing a link with the remote terminal device, the relay terminal device further establishes a PDU session used for relay with the network, so that the remote terminal device may send data to the data network via the relay terminal device, that is, through the PDU session, communicate with the data network, and access a business on the data network. In other words, the data network communicates with the remote terminal device via the relay terminal device, that is, through the PDU session, to provide the service for the remote terminal device.

It should be noted that, the following description about that the remote terminal device sends data means that the remote terminal device sends the data to the relay terminal device, meaning that the remote terminal device sends the data on the link between the remote terminal device and the relay terminal device, that is, the remote terminal device sends the data to the data network, where the data is user plane data. In addition, unless otherwise specified, authentication in the following refers to authentication performed by the data network on the terminal device, namely, secondary authentication.

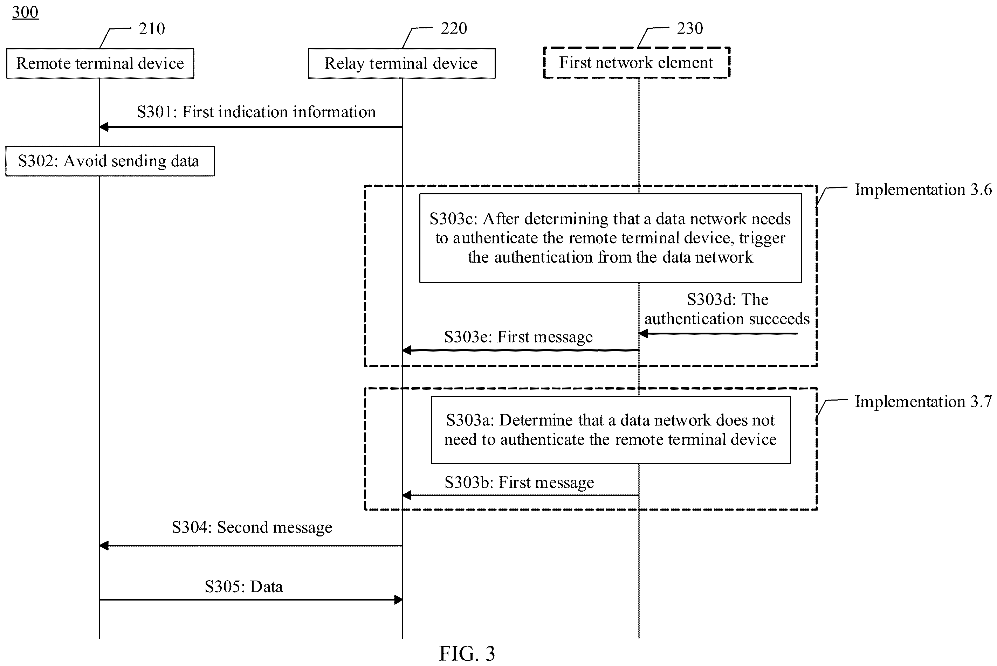

FIG. 3 is a schematic flowchart of a communication method 300 according to an embodiment of this application. The method may be applied to the network architecture shown in FIG. 2. As shown in FIG. 3, the method includes the following plurality of steps.

S301: A relay terminal device sends first indication information to a remote terminal device.

The first indication information may indicate the remote terminal device to avoid sending data, or indicate that the remote terminal device is pending authentication by a data network, or indicate that a PDU session is suspending/pending (pending), or indicate that the authentication of the data network is to be performed on the PDU session. The PDU session is associated with the relay terminal device. To be specific, the PDU session is a PDU session that is established by the relay terminal device for relay, that is, the PDU session is used by the remote terminal device to send the data to the data network via the relay terminal device. That the authentication of the data network is to be performed on the PDU session means that the remote terminal device is pending authentication by the data network that uses the PDU session.

Optionally, the first indication information is included in an existing message, for example, included in a direct communication accept (direct communication accept, DCA) message, or included in a new message, or the relay terminal device directly sends the first indication information to the remote terminal device. Optionally, the relay terminal device may send the first indication information to the remote terminal device through a user plane or a control plane. That the remote terminal device is pending authentication by the data network means that secondary authentication performed by the data network on the remote terminal device is to be performed on the remote terminal device.

Optionally, before the relay terminal device sends the first indication information to the remote terminal device, the relay terminal device determines that the remote terminal device is pending authentication by the data network. It should be noted that, herein, that the relay terminal device determines that the remote terminal device is pending authentication by the data network is merely preliminary determining, and does not mean that the authentication of the data network is definitely performed on the remote terminal device subsequently.

How the relay terminal device determines that the remote terminal device is pending authentication by the data network is not limited in embodiments of this application. For example, the relay terminal device determines, based on a first service code, whether the remote terminal device is pending authentication by the data network.

The first service code is used to identify the data network accessed by the remote terminal device via the relay terminal device. It may also be understood that the first service code is associated with the data network, that is, the first service code corresponds to the data network. The remote terminal device may access, via the relay terminal device, the data network corresponding to the first service code. Correspondingly, the data network corresponding to the first service code provides a service for the remote terminal device via the relay terminal device. One service code corresponds to one data network, and one data network may correspond to one or more service codes. For example, the first service code is a relay service code (relay service code, RSC) or a data network sub-name identifier.

The first service code is obtained by the relay terminal device before the relay terminal device determines that the remote terminal device is pending authentication by the data network. For example, the relay terminal device is pre-configured with the first service code at the factory. For another example, the first service code is delivered to the relay terminal device by an operator network or by the data network through the operator network. For example, when authorizing the relay terminal device to provide a UE-to-network relay service, the operator network delivers the first service code to the relay terminal device.

That the relay terminal device determines, based on the first service code, whether the remote terminal device is pending authentication by the data network may be that when the first service code is marked as authentication required, the relay terminal device determines that the remote terminal device is pending authentication by the data network; or when the first service code is not marked as authentication required, or the first service code is marked as authentication not required, the relay terminal device determines that the data network does not need to authenticate the remote terminal device.

The first service code may be marked by using one of the following Implementation 3.1 to Implementation 3.5.

**Implementation 3.1:** If the data network corresponding to the first service code has performed authentication on the relay terminal device, for example, when the relay terminal device establishes the PDU session used for relay, the relay terminal device marks the first service code as authentication required.

For example, the relay terminal device associates the first service code with a first identifier, which indicates that the first service code is marked as authentication required.

For another example, when the relay terminal device obtains the first service code, the first service code is associated with the first identifier, or after obtaining the first service code, the relay terminal device associates the first identifier with the first service code, where a value of the first identifier is a first value. After the data network corresponding to the first service code authenticates the relay terminal device, the relay terminal device sets the first identifier corresponding to the first service code from the first value to a second value. In other words, when the value of the first identifier corresponding to the first service code is the first value, the first service code is marked as authentication not required; or when the value of the first identifier corresponding to the first service code is the second value, the first service code is marked as authentication required. For example, the first value is 0, and the second value is 1. The relay terminal device may store a service code and an identifier associated with the service code in a format of (first service code, first identifier). For example, (first service code, 0) indicates that the first service code is marked as authentication not required, and (first service code, 1) indicates that the first service code is marked as authentication required.

**Implementation 3.2:** The relay terminal device checks whether the first service code is included in a first list; and when the first list includes the first service code, the relay terminal device considers that the first service code is marked as authentication required; or when the first list does not include the first service code, the relay terminal device considers that the first service code is marked as that requiring no authentication, where the first list includes service codes associated with all data networks that need to perform authentication. It should be noted that, in this implementation, the first service code may not be explicitly marked as whether the authentication is required. Instead, if the first list includes the first service code, the relay terminal device may consider that the first service code is marked as authentication required. Correspondingly, if the first list does not include the first service code, the relay terminal device considers that the first service code is marked as authentication not required.

The first list may be maintained and updated by the relay terminal device. For example, after the data network corresponding to the first service code has performed authentication on the relay terminal device, the relay terminal device adds the first service code to the first list. In other words, the first list includes service codes corresponding to all data networks that have performed the authentication on the relay terminal device. Alternatively, the first list may be specified in a standard, or may be pre-configured for the relay terminal device. For example, when the relay terminal device registers with the network, the network configures the first list for the relay terminal device. This is not limited in embodiments of this application.

It should be understood that, in Implementation 3.1, and in Implementation 3.2 in which the first list is maintained and updated by the relay terminal device, the relay terminal device determines, based on whether the first service code is marked as authentication required, whether the remote terminal device is pending authentication by the data network. In other words, the relay terminal device determines, based on whether the data network corresponding to the first service code has performed the authentication on the relay terminal device, whether the data network needs to authenticate the remote terminal device.

**Implementation 3.3:** When the relay terminal device obtains the first service code, the first service code is associated with a first identifier. For example, the operator network or the data network associates the first service code with the first identifier, and delivers the first service code and the first identifier to the relay terminal device. When a value of the first identifier is a first value, the first service code is marked as authentication not required; or when a value of the first identifier is a second value, the first service code is marked as authentication required. For example, the first value is 0, and the second value is 1.

**Implementation 3.4:** The relay terminal device obtains the first service code. When the first service code is associated with a first identifier, the first service code is marked as authentication required; or when the first service code is not associated with a first identifier, the first service code is marked as authentication not required. For example, before delivering the first service code to the relay terminal device, the operator network or the data network determines whether to associate the first service code with the first identifier.

**Implementation 3.5:** The first service code is a bit string. When a value of a first bit of the first service code is a first value, the first service code is marked as authentication not required; or when a value of a first bit of the first service code is a second value, the first service code is marked as authentication required. For example, the first value is 0, and the second value is 1. For example, before delivering the first service code to the relay terminal device, the operator network or the data network determines to set the value of the first bit of the first service code to the first value or the second value.

Service codes that can be obtained by the terminal device may be determined by the operator network, or may be determined by the data network. Optionally, for a terminal device requiring the authentication and a terminal device requiring no authentication, the operator network or the data network may allocate different service codes corresponding to the same data network. For example, if the data network needs to authenticate a terminal device A, but does not need to authenticate a terminal device B, the data network allocates a service code #1 to the terminal device A, and allocates a service code #2 to the terminal device B. In other words, a same service code is obtained only when two terminal devices both require the authentication of the data network or require no authentication of the data network. Further, in a mutual discovery process, the remote terminal device and the relay terminal device may use the first service code. In other words, the remote terminal device and the relay terminal device can discover each other only when the remote terminal device and the relay terminal device both obtain the first service code. Therefore, the data network corresponding to the first service code needs to authenticate both the remote terminal device and the relay terminal device, or the data network corresponding to the first service code does not need to authenticate the remote terminal device or the relay terminal device. In this way, the relay terminal device may accurately determine, based on the first service code, whether the remote terminal device is pending authentication by the data network.

It should be noted that, for the terminal device requiring the authentication and the terminal device requiring no authentication, the operator network or the data network may allocate, based on Implementation 3.3, a same service code associated with identifiers having different values; or allocate, based on Implementation 3.4, a same service code associated with identifiers at different time.

That the relay terminal device determines, based on the first service code, whether the remote terminal device is pending authentication by the data network may alternatively be that when the data network corresponding to the first service code is marked as authentication required, the relay terminal device determines that the remote terminal device is pending authentication by the data network; or when the data network corresponding to the first service code is not marked as authentication required, or the data network corresponding to the first service code is marked as authentication not required, the relay terminal device determines that the data network does not need to authenticate the remote terminal device. For marking the data network corresponding to the first service code, refer to the foregoing Implementation 3.1 to Implementation 3.5. Details are not described herein again.

Optionally, the relay terminal device may further check whether authentication information of the remote terminal device is locally stored. The authentication information is locally stored by the relay terminal device after the data network corresponding to the first service code has authenticated the remote terminal device. When the authentication information is not locally stored, and it is determined, based on the first service code, that the remote terminal device is pending authentication by the data network, the first indication information is sent to the remote terminal device.

S302: The remote terminal device avoids, based on the first indication information, sending the data.

It may also be understood that the remote terminal device avoids, based on the first indication information, sending the data to the relay terminal device, that is, avoids sending the data on a link between the remote terminal device and the relay terminal device, that is, avoids sending the data to the data network. The data is user plane data.

S303: The relay terminal device receives a first message.

In a possible implementation **(Implementation 3.6),** the first message indicates that the data network has authenticated the remote terminal device. Optionally, the first message includes first information, and the first information indicates that the data network has authenticated the remote terminal device.

The first message and the first information may be existing. For example, the first message is a remote UE report acknowledgment (remote UE report ack) message, and the first information is an extensible authentication protocol (extensible authentication protocol, EAP) success message. Alternatively, the first message and the first information are newly defined. Alternatively, the first message is existing, and the first information is newly defined. For example, the first message includes a first field, the first field indicates an authentication result, and when a value of the first field is a third value, it indicates that the authentication succeeds.

Optionally, the first message is from the data network, for example, an authentication, authorization, and accounting (authentication, authorization, and accounting, AAA) server in the data network. After the data network has authenticated the remote terminal device, the data network directly sends the first message to the relay terminal device, or indirectly sends the first message to the relay terminal device via a core network element, or the data network sends an authentication success result to the core network element, and the core network element sends the first message to the relay terminal device. For example, the core network element may be an SMF network element corresponding to the relay terminal device.

In another possible implementation **(Implementation 3.7),** the first message indicates that the data network does not need to authenticate the remote terminal device, that is, indicates that the authentication of the data network is not required.

In this implementation, the first message is from a first network element, and the first network element is a network element corresponding to the relay terminal device. In other words, the first network element provides a service for the relay terminal device. For example, the first network element is an SMF network element that manages the PDU session of the relay terminal device. In this implementation, step S303 may be replaced with the following steps S303a and S303b.

S303a: The first network element determines that the data network does not need to authenticate the remote terminal device.

Optionally, the first network element determines, under triggering of the relay terminal device, whether the data network needs to authenticate the remote terminal device, that is, determines whether the authentication of the data network needs to be performed on the remote terminal device, and determines that the authentication is not required. For example, after sending the first indication information to the remote terminal device, or after determining that the remote terminal device is pending authentication by the data network, the relay terminal device sends second indication information to the first network element, to indicate the first network element to determine whether the data network needs to authenticate the remote terminal device. The second indication information may be included in a remote terminal device report (remote UE report), or may be independent of the remote terminal device report, and is sent to the first network element together with the remote terminal device report. After receiving the second indication message, the first network element performs determining.

Optionally, after receiving information that is about the remote terminal device and that is reported by the relay terminal device, the first network element determines whether the data network needs to authenticate the remote terminal device, that is, determines whether the authentication of the data network needs to be performed on the remote terminal device, and determines that the authentication is not required. For example, after the relay terminal device sends the first indication information to the remote terminal device, or determines that the remote terminal device is pending authentication by the data network, the relay terminal device reports the information about the remote terminal device to the first network element. For example, the relay terminal device sends the remote terminal device report to the first network element. After receiving the information about the remote terminal device, the first network element performs determining, and determines that the data network does not need to authenticate the remote terminal device.

How the first network element performs determining and determines that the data network does not need to authenticate the remote terminal device is not limited in embodiments of this application. For example, the first network element determines, based on subscription data of the remote terminal device, that the data network does not need to authenticate the remote terminal device. For example, the subscription data of the remote terminal device includes a second field and a third field. When the second field indicates that the data network does not need to authenticate the remote terminal device, or when the second field indicates that the data network needs to authenticate the remote terminal device, and the third field indicates that the data network has authenticated the remote terminal device, the SMF (Relay) determines that the data network does not need to authenticate the remote terminal device in the current process. Alternatively, the first network element may determine, based on a local policy or with reference to the local policy and the subscription data of the remote terminal device, that the data network does not need to authenticate the remote terminal device.

How the first network element obtains the subscription data of the remote terminal device is not limited in embodiments of this application. For example, before determining that the data network does not need to authenticate the remote terminal device, the first network element may receive identity information of the remote terminal device from the relay terminal device, for example, a 5G remote user key identifier (5G ProSe remote user key identity/identifier, 5GPRUK ID) of the remote terminal device, obtain an SUPI of the remote terminal device based on the identity information of the remote terminal device, and then find the corresponding subscription data from a third network element based on the SUPI. For example, the third network element is a UDM network element.

It should be noted that a reason why the relay terminal device determines that the remote terminal device is pending authentication by the data network, while the first network element determines that the data network does not need to authenticate the remote terminal device is that manners in which the relay terminal device and the first network element determine whether the data network needs to authenticate the remote terminal device may be different. For example, if the data network corresponding to the first service code has performed the authentication on the relay terminal device, the relay terminal device determines that the data network also needs to authenticate the remote terminal device. However, the same data network may need to authenticate the relay terminal device, but does not need to authenticate the remote terminal device. In this case, the second field in the subscription data of the remote terminal device indicates that the data network does not need to authenticate the remote terminal device. Therefore, after performing determining based on the subscription data, the first network element may determine that the data network does not need to authenticate the remote terminal device.

S303b: The first network element sends the first message to the relay terminal device.

Optionally, the first message includes the first information, and the first information indicates that the authentication of the data network is not required. Optionally, the first message is existing, and the first information is newly defined. For example, the first message is a remote terminal device report acknowledgment message. Alternatively, first message and the first information both are newly defined. For example, the first message includes a first field, and a value of the first field is the second value, which indicates that the authentication of the data network is not required. For another example, the first message includes a first field, and the first field includes an authentication result and a cause value. The authentication result indicates that the authentication fails, and the cause value indicates that the authentication of the data network is not required.

Optionally, the first message does not include the authentication result. After receiving the first message, the relay terminal device may determine, if the first message does not include the authentication result, that the authentication of the data network is not required. For example, the first message is a remote terminal device report acknowledgment message, and the message does not include an EAP success message or an EAP failure message.

In Implementation 3.6, before the relay terminal device receives the first message, a first network element may also determine whether the data network needs to authenticate the remote terminal device. However, in this case, a determining result of the first network element is that the data network needs to authenticate the remote terminal device. In this implementation, step S303 may be replaced with the following steps S303c to S303e.

S303c: After determining that the data network needs to authenticate the remote terminal device, the first network element triggers the authentication performed by the data network on the remote terminal device.

A manner in which the first network element determines that the data network needs to authenticate the remote terminal device is not limited in embodiments of this application. For example, the first network element may use the following Implementation 3.6a or Implementation 3.6b.

**Implementation 3.6a:** The first network element receives third indication information, where the third indication information indicates that the data network needs to authenticate the remote terminal device, and the first network element determines, based on the third indication information, that the data network needs to authenticate the remote terminal device.

For example, after sending the first indication information to the remote terminal device, or after determining that the remote terminal device is pending authentication by the data network, the relay terminal device sends the third indication information to the first network element. The third indication information may be included in a remote terminal device report, or the third indication information may be independent of the remote terminal device report, and is sent to the first network element together with the remote terminal device report.

**Implementation 3.6b:** The first network element determines, based on the first service code, that the data network needs to authenticate the remote terminal device, where the first service code is marked as authentication required.

The first service code may be sent by the relay terminal device to the first network element. For example, after sending the first indication information to the remote terminal device, or after determining that the remote terminal device is pending authentication by the data network, the relay terminal device sends the first service code to the first network element.

Based on Implementation 3.1, Implementation 3.3, and Implementation 3.4, when sending the first service code to the first network element, the relay terminal device may further send the first identifier associated with the first service code. The first network element may determine, based on the first identifier in a same manner as the relay terminal device, whether the first service code is marked as authentication required.

Alternatively, based on Implementation 3.3 and Implementation 3.4, after receiving the first service code from the relay terminal device, the first network element queries locally stored service code configuration information, to determine the value of the first identifier associated with the first service code (Implementation 3.3), or determine whether the first service code is associated with the first identifier (Implementation 3.4), and then determine, based on the first identifier in a same manner as the relay terminal device, whether the first service code is marked as authentication required.

Alternatively, based on Implementation 3.5, the first network element may determine, based on the first bit of the first service code in a same manner as the relay terminal device, whether the first service code is marked as authentication required.

Alternatively, the first network element may determine that a second list includes the first service code, and consider that the first service code is marked as authentication required, to determine that the data network needs to authenticate the remote terminal device. The second list includes service codes associated with all data networks that need to authenticate the remote terminal device. It should be noted that, in this example, the first service code may not be explicitly marked as authentication required. Instead, if the second list includes the first service code, the first network element considers that the first service code is marked as authentication required. The second list may be specified in a standard, or may be pre-configured for the first network element. For example, when the first network element is initially instantiated, a network management system configures the second list for the first network element. This is not limited in embodiments of this application. Optionally, the first list is the same as the second list, or the second list includes the first list.

S303d: The first network element receives the authentication success result.

For example, after the authentication of the data network on the remote terminal device is completed, the data network, for example, the AAA server in the data network, sends the authentication success result, for example, the EAP success message, to the first network element. S303e: The first network element sends the first message to the relay terminal device.

Correspondingly, when the data network fails to authenticate the remote terminal device, the data network may send an authentication failure result to the first network element, and then the first network element indicates the relay terminal device to release the link between the relay terminal device and the remote terminal device, so that transmission resources can be saved.

Optionally, in Implementation 3.6 and Implementation 3.7, the first message may indicate the relay terminal device to trigger the remote terminal device to send the data, or indicate that the remote terminal device may start to send the data.

The first message may be explicitly indicated. For example, the first message includes the first information, and the first information indicates the relay terminal device to trigger the remote terminal device to send the data, or indicates that the remote terminal device may start to send the data. The first message and the first information may be newly defined, or the first message is existing, and the first information is newly defined. This is not limited in embodiments of this application.

Alternatively, the first message may be implicitly indicated. Therefore, after receiving the first message, the relay terminal device may determine that the authentication of the data network is not required, or determine that the remote terminal device may start to send the data, or determine that a second message may be sent to the remote terminal device. For example, when the first message is the remote UE report acknowledgment message, and the remote UE report acknowledgment message does not include the EAP failure message, or the remote UE report acknowledgment message does not indicate the relay terminal device to release the link between the relay terminal device and the remote terminal device, the relay terminal device sends the second message to the remote terminal device.

Alternatively, the first message may explicitly or implicitly indicate that the remote terminal device may access the data network, or indicate that the remote terminal device is authorized to access the data network.

In Implementation 3.7, if the third field in the subscription data of the remote terminal device indicates that the data network has authenticated the remote terminal device, the first message may also explicitly or implicitly indicate that the data network has authenticated the remote terminal device.

It should be noted that step S303 is not shown in the figure.

S304: The relay terminal device sends the second message to the remote terminal device based on the first message.

When the first message includes the first information, the relay terminal device sends the second message to the remote terminal device based on the first information in the first message.

Optionally, before the relay terminal device sends the second message to the remote terminal device, the relay terminal device determines, based on the first message or the first information, that the data network does not need to authenticate the remote terminal device, or determines that the data network has authenticated the remote terminal device, or determines that the remote terminal device may start to send the data.

Based on the foregoing descriptions of step S303, the first message or the first information includes the following three cases.

**Case 1:** The first message or the first information indicates that the data network does not need to authenticate the remote terminal device, that is, the authentication of the data network is not required.

**Case 2:** The first message or the first information indicates that the data network has authenticated the remote terminal device.

In Case 1, the second message may indicate that the data network does not need to authenticate the remote terminal device, that is, the authentication of the data network is not required, or the second message may indicate that the data network has authenticated the remote terminal device. Optionally, the second message includes second information, and the second information indicates that the authentication of the data network is not required, or indicates that the data network has authenticated the remote terminal device.

In Case 2, the second message may indicate that the data network has authenticated the remote terminal device. Optionally, the second message includes second information, and the second information indicates that the data network has authenticated the remote terminal device. For example, the second information is the EAP success message.

Optionally, in Case 1 and Case 2, the second message may be used to trigger the remote terminal device to send the data, or may indicate that the remote terminal device may start to send the data. Optionally, the second message includes second information, and the second information indicates that the remote terminal device may start to send the data.

The second message may be an existing message, or may be a newly defined message. For example, the second message is a PC5-S signaling message. For example, the relay terminal device sets a second field in the second message to a third value, to indicate that the authentication of the data network is not required, or the relay terminal device sets the second field in the second message to a fourth value, to indicate that the data network has authenticated the remote terminal device. For another example, the second field in the second message includes an authentication result and a cause value. In Case 1, the authentication result indicates that the authentication fails, and the cause value indicates that the authentication of the data network is not required.

S305: The remote terminal device sends the data.

That the remote terminal device sends the data means that the remote terminal device sends the data to the relay terminal device, that is, sends the data on the link between the remote terminal device and the relay terminal device, or mean that the remote terminal device sends the data to the data network.

Optionally, after receiving the second message, the remote terminal device determines that the data network does not need to authenticate the remote terminal device, or determines that the data network has authenticated the remote terminal device, that is, determines that the remote terminal device may start to send the data, and then starts to send the data.

Based on the foregoing solution, when the remote terminal device is notified that the authentication of the data network is to be performed and indicated not to send the data currently, after learning that the authentication of the data network is not required or the authentication has been successfully completed, the relay terminal device triggers, in time, the remote terminal device to start to send the data. This can prevent the remote terminal device from waiting indefinitely and failing to send the data for a long time, so that communication efficiency of the remote terminal device can be improved, and the remote terminal device uses a service of the data network as soon as possible.

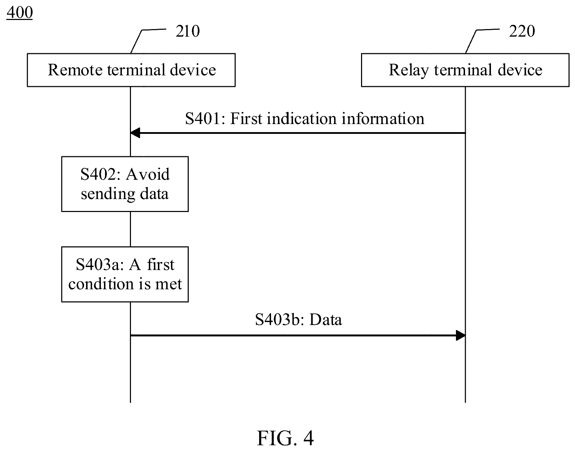

FIG. 4 is a schematic flowchart of another communication method 400 according to an embodiment of this application. The method may be applied to the network architecture shown in FIG. 2. In the communication method 300, the remote terminal device starts to send the data under triggering of the relay terminal device. In comparison with the communication method 300, in the communication method 400, the remote terminal device may determine an occasion for starting to send the data. As shown in FIG. 4, the method includes the following plurality of steps.

S401: A relay terminal device sends first indication information to a remote terminal device. S402: The remote terminal device avoids, based on the first indication information, sending data. For specific implementations of steps S401 and S402, respectively refer to steps S301 and S302. For brevity, details are not described herein again.

S403: The remote terminal device determines that a first condition is met, and then starts to send the data.

That the remote terminal device starts to send the data means that the remote terminal device starts to send the data to the relay terminal device, that is, starts to send the data on a link between the remote terminal device and the relay terminal device, that is, starts to send the data to a data network.

It should be noted that step S403 includes steps S403a and S403b in FIG. 4.

Optionally, the remote terminal device may determine, in one of the following Implementation 4.1 to Implementation 4.3, that the first condition is met.

In a possible implementation **(Implementation 4.1),** if the remote terminal device receives a second message, the remote terminal device determines that the first condition is met. Optionally, if the second message includes second information, the remote terminal device determines, based on the second information, that the first condition is met.

The second message or the second information indicates that the data network does not need to authenticate the remote terminal device, that is, the authentication of the data network is not required. The second message or the second information may also be used to trigger/indicate the remote terminal device to send the data. The second message or the second information may further indicate that the remote terminal device may start to send the data. Alternatively, the second message or the second information indicates that the data network has authenticated the remote terminal device. For example, the second information is an EAP success message. For specific implementation details of Implementation 4.1, refer to the method 300. Details are not described herein again.

In another possible implementation **(Implementation 4.2),** the first condition includes that duration between a current moment and a moment at which the remote terminal device receives the first indication information is greater than or equal to first duration t, where t is greater than 0. If the remote terminal device determines that the duration between the current moment and the moment at which the remote terminal device receives the first indication information is greater than or equal to the first duration t, the remote terminal device determines that the first condition is met, and may start to send the data.

For example, the first duration may be implemented by utilizing a timer or a timer.

For example, the remote terminal device starts a timer after receiving the first indication information. Duration of the timer is equal to the first duration t. If the timer expires, the first condition is met, and the remote terminal device starts to send the data.

Alternatively, for example, the remote terminal device starts a timer after receiving the first indication information. If a difference between an initial value of the timer and a value of the timer at a current moment is greater than or equal to the first duration t, the first condition is met, and the remote terminal device starts to send the data. For example, after receiving the first indication information, the remote terminal device starts the timer, where the initial value of the timer is t1, and t1 is greater than or equal to 0. If the value of the timer is greater than or equal to t1+t, the first condition is met, and the remote terminal device starts to send the data.

Optionally, the first condition further includes: The remote terminal device has not received an authentication-related message up to now after the remote terminal device receives the first indication information. The message related to the authentication may be a message used to request to perform the authentication, for example, may be an EAP request/identity (EAP-Request/Identity). This can avoid a data sending failure caused by a fact that the remote terminal device starts to send the data during authentication.

In still another possible implementation **(Implementation 4.3),** if the remote terminal device determines that the data network does not need to authenticate the remote terminal device, the remote terminal device determines that the first condition is met, and the remote terminal device may start to send the data.

For example, the remote terminal device may determine, in the following Implementation 4.3a and Implementation 4.3b, that the data network does not need to authenticate the remote terminal device.

**Implementation 4.3a:** The remote terminal device determines, based on configuration of the data network, whether the data network needs to authenticate the remote terminal device. The configuration of the data network may be sent by the network to the remote terminal device when the remote terminal device registers with the network, or may be sent by the relay terminal device to the remote terminal device when the remote terminal device establishes a link with the relay terminal device. This is not limited in embodiments of this application.

Optionally, the remote terminal device determines, based on whether the configuration of the data network includes a credential used for the authentication, whether the data network needs to authenticate the remote terminal device. When the configuration of the data network does not include the credential used for the authentication, the remote terminal device determines that the data network does not need to authenticate the remote terminal device; or when the configuration of the data network includes the credential used for the authentication, the remote terminal device determines that the data network needs to authenticate the remote terminal device. For example, the credential may be a key or a certificate used for authentication.

**Implementation 4.3b:** The remote terminal device determines, based on a first service code, that the data network does not need to authenticate the remote terminal device, where the first service code is marked as authentication not required.

For specific implementation details of Implementation 4.3b, refer to Implementations 3.1 to 3.5. Details are not described herein again.

Optionally, in Implementation 4.2, before the remote terminal device starts the timer or the timer, the remote terminal device may alternatively determine whether the data network needs to authenticate the remote terminal device. When determining that the data network needs to authenticate the remote terminal device, the remote terminal device starts the timer or the timer. In this way, the timer or the timer can be prevented from being started unnecessarily, and energy consumption of the remote terminal device can be reduced.

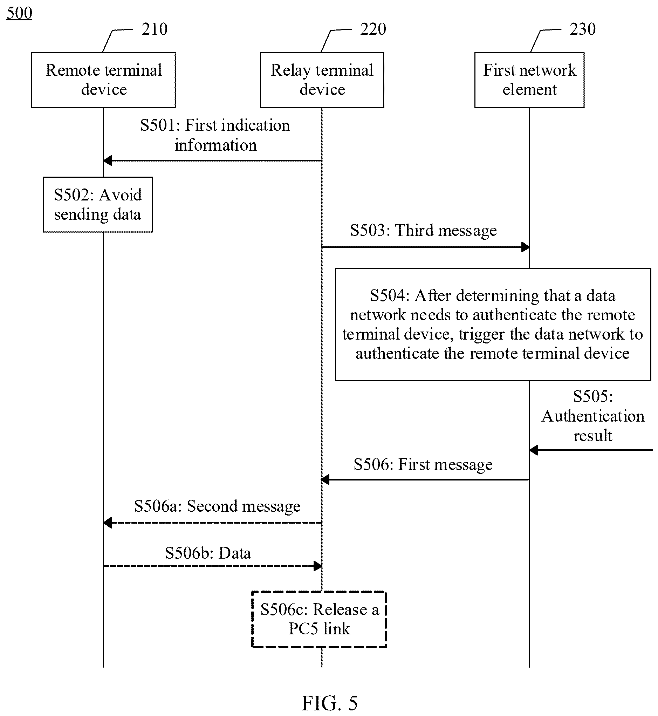

Based on the foregoing solution, when the remote terminal device is notified that the authentication of the data network is to be performed and indicated not to send the data currently, the remote terminal device starts to send the data in time after determining that the first condition is met. This can prevent the remote terminal device from waiting indefinitely and failing to send the data for a long time, so that communication efficiency of the remote terminal device can be improved. FIG. 5 is a schematic flowchart of still another communication method 500 according to an embodiment of this application. The method may be applied to the network architecture shown in FIG. 2. In the communication method 500, for a terminal device requiring authentication and a terminal device requiring no authentication, an operator network or a data network allocates different service codes corresponding to a same data network, and a relay terminal device determines, based on a first service code, that the authentication of the data network is to be performed on a remote terminal device.

The first service code is used to identify the data network accessed by the remote terminal device via the relay terminal device. It may also be understood that the first service code is associated with the data network, that is, the first service code corresponds to the data network. The remote terminal device may access, via the relay terminal device, the data network corresponding to the first service code. Correspondingly, the data network corresponding to the first service code provides a service for the remote terminal device via the relay terminal device. One service code corresponds to one data network, and one data network may correspond to one or more service codes. For example, the first service code is an RSC. For example, the first service code is a data network sub-name identifier.

The first service code is obtained by the relay terminal device before the relay terminal device determines that the remote terminal device is pending authentication by the data network. For example, the relay terminal device is pre-configured with the first service code at the factory. For another example, the first service code is delivered to the relay terminal device by the operator network or by the data network through the operator network. For example, when authorizing the relay terminal device to provide a UE-to-network relay service, the operator network delivers the first service code to the relay terminal device.

For the terminal device requiring the authentication and the terminal device requiring no authentication, the operator network or the data network allocates different service codes corresponding to the same data network. For example, if the data network needs to authenticate a terminal device A, but does not need to authenticate a terminal device B, the data network allocates a service code #1 to the terminal device A, and allocates a service code #2 to the terminal device B. In other words, a same service code is obtained only when two terminal devices both require the authentication of the data network or require no authentication of the data network. Further, in a mutual discovery process, the remote terminal device and the relay terminal device may use the first service code. In other words, the remote terminal device and the relay terminal device can discover each other only when the remote terminal device and the relay terminal device both obtain the first service code. Therefore, the data network corresponding to the first service code needs to authenticate both the remote terminal device and the relay terminal device, or the data network corresponding to the first service code does not need to authenticate the remote terminal device or the relay terminal device.

The following describes the method 500 by using an example with reference to steps in FIG. 5. For a part that is not described in detail, refer to the method 300.

S501: The relay terminal device sends first indication information to the remote terminal device. The first indication information may indicate the remote terminal device to avoid sending data, or indicate that a PDU session is suspending/pending (pending), or indicate that the PDU session requires secondary authentication, or indicate that the remote terminal device is pending authentication by the data network. The PDU session is associated with the relay terminal device. To be specific, the PDU session is a PDU session that is established by the relay terminal device for relay, that is, used by the remote terminal device to send the data to the data network via the relay terminal device. That the authentication of the data network is to be performed on the PDU session means that the remote terminal device is pending authentication by the data network that uses the PDU session.

Optionally, the first indication information is included in an existing message, for example, included in a DCA message, or included in a new message, or the relay terminal device directly sends the first indication information to the remote terminal device. Optionally, the relay terminal device may send the first indication information to the remote terminal device through a user plane or a control plane.

That the remote terminal device is pending authentication by the data network means that the secondary authentication performed by the data network on the remote terminal device is to be performed on the remote terminal device.

Before the relay terminal device sends the first indication information to the remote terminal device, the relay terminal device determines, based on the first service code, that the remote terminal device is pending authentication by the data network.

That the relay terminal device determines, based on the first service code, whether the remote terminal device is pending authentication by the data network may be that when the first service code is marked as authentication required, the relay terminal device determines that the remote terminal device is pending authentication by the data network; or when the first service code is not marked as authentication required, or the first service code is marked as authentication not required, the relay terminal device determines that the data network does not need to authenticate the remote terminal device.

That the relay terminal device determines, based on the first service code, whether the remote terminal device is pending authentication by the data network may alternatively be that when the data network corresponding to the first service code is marked as authentication required, the relay terminal device determines that the remote terminal device is pending authentication by the data network; or when the data network corresponding to the first service code is not marked as authentication required, or the data network corresponding to the first service code is marked as authentication not required, the relay terminal device determines that the data network does not need to authenticate the remote terminal device.

For marking the first service code or marking the data network corresponding to the first service code, refer to the foregoing Implementation 3.1 or the foregoing Implementation 3.2, where the first list is maintained and updated by the relay terminal device.

S502: The remote terminal device avoids, based on the first indication information, sending the data.

It may also be understood that the remote terminal device avoids, based on the first indication information, sending the data to the relay terminal device, that is, avoids sending the data on a link between the remote terminal device and the relay terminal device, that is, avoids sending the data to the data network. The data is user plane data.

S503: The relay terminal device sends a third message to a first network element.

The first network element is a network element corresponding to the relay terminal device. In other words, the first network element provides a service for the relay terminal device. For example, the first network element may be an SMF network element that manages the PDU session of the relay terminal device.

In a possible implementation, the third message includes the first service code, and the first service code is used by the first network element to determine that the data network needs to authenticate the remote terminal device. The first service code is marked as authentication required.

For example, if a second list includes the first service code, the first network element may consider that the first service code is marked as authentication required, to determine that the data network needs to authenticate the remote terminal device. The second list includes service codes associated with all data networks that need to perform the authentication. It should be noted that, in this example, the first service code is not explicitly marked as authentication required. Instead, if the second list includes the first service code, the first network element considers that the first service code is marked as authentication required. The second list may be specified in a standard, or may be pre-configured for the first network element. For example, when the first network element is initially instantiated, a network management system configures the second list for the first network element. The first list is the same as the second list, or the second list includes the first list.

For another example, before receiving the third message, the first network element obtains the first service code and a first identifier associated with the first service code. A value of the first identifier is a second value, that is, the first service code is marked as authentication required. After receiving the third message, the first network element queries the first identifier associated with the first service code, to determine that the first service code is marked as authentication required.

For another example, before receiving the third message, the first network element obtains the first service code, and the first service code is associated with a first identifier. In other words, the first service code is marked as authentication required. After receiving the third message, the first network element determines that the first service code is associated with the first identifier, to determine that the first service code is marked as authentication required.

The first network element may obtain the first service code from the network management system when being initially instantiated.

In another possible implementation, based on Implementation 3.1, the third message includes the first service code and a first identifier associated with the first service code, and if the first service code is associated with the first identifier or a value of the first identifier associated with the first service code is a second value, the first network element determines that the data network needs to authenticate the remote terminal device.

In still another possible implementation, the third message includes third indication information, where the third indication information indicates that the data network needs to authenticate the remote terminal device, so that the first network element determines that the data network needs to authenticate the remote terminal device; or the third indication information indicates the first network element to trigger the data network to authenticate the remote terminal device.

In yet another possible implementation, the third message includes an identifier of the remote terminal device, and is used to obtain subscription data of the remote terminal device. The first network element determines, based on the subscription data of the remote terminal device, that the data network needs to authenticate the remote terminal device. The subscription data of the remote terminal device indicates that the data network needs to authenticate the remote terminal device.

For example, the third message is a remote user report, and the remote user report includes identity information of the remote terminal device, for example, a 5GPRUK ID of the remote terminal device. The first network element obtains an SUPI of the remote terminal device based on the identity information of the remote terminal device, and then finds the corresponding subscription data from a third network element based on the SUPI. For example, the third network element is a UDM network element. For example, the subscription data of the remote terminal device includes a second field, and the second field indicates that the data network needs to authenticate the remote terminal device.

It should be noted that, in the method 500, for the terminal device requiring the authentication and the terminal device requiring no authentication, the operator network or the data network allocates different service codes corresponding to the same data network. Therefore, the data network corresponding to the first service code needs to authenticate both the remote terminal device and the relay terminal device, or the data network corresponding to the first service code does not need to authenticate the remote terminal device or the relay terminal device. Therefore, if the relay terminal device determines, based on the first service code, that the remote terminal device is pending authentication by the data network in step S501, in step S503, the first network element determines, based on the first service code, the first identifier associated with the first service code, or the subscription data of the remote terminal device, that the remote terminal device is pending authentication by the data network, and then performs step S504.

S504: After determining that the data network needs to authenticate the remote terminal device, the first network element triggers the data network to authenticate the remote terminal device.

For a specific implementation in which the first network element triggers the data network to authenticate the remote terminal device, refer to existing protocols. Details are not described herein. S505: The first network element sends an authentication result to the relay terminal device.

Optionally, the first network element receives a result of the authentication performed by the data network on the remote terminal device. For example, the authentication result is from the data network that authenticates the remote terminal device, or is from an AAA server in the data network.

The authentication result includes an authentication success or an authentication failure.

For example, the first network element sends a remote UE report acknowledgment message to the relay terminal device, where the remote UE report acknowledgment message includes an EAP success message or an EAP failure message.

S506: The first network element sends a first message to the relay terminal device based on the authentication result.

When the authentication result is that the authentication succeeds, the first message indicates that the data network has authenticated the remote terminal device. The first message may be an existing message. For example, the first message is the remote UE report acknowledgment message, or the first message may be a newly defined message.

Optionally, the first message includes first information. The first information indicates that the data network has authenticated the remote terminal device. For example, the first information is the EAP success message. Optionally, when the authentication result is that the authentication succeeds, the communication method 500 further includes steps S506a and S506b.

S506a: The relay terminal device sends a second message to the remote terminal device.

The second message indicates that the data network has authenticated the remote terminal device, or is used to trigger the remote terminal device to send the data, or indicates that the remote terminal device may start to send the data. Optionally, the second message includes second information. The second information indicates that the data network has authenticated the remote terminal device. For example, the second information is the EAP success message, or the second information indicates the remote terminal device to send the data.

S506b: The remote terminal device sends the data.

That the remote terminal device sends the data means that the remote terminal device sends the data to the relay terminal device, that is, sends the data on the link between the remote terminal device and the relay terminal device, or may also be understood that the remote terminal device sends the data to the data network. The data is the user plane data.

When the authentication result is that the authentication fails, the first message indicates that the authentication performed by the data network on the remote terminal device fails, or indicates the relay terminal device to release the link between the relay terminal device and the remote terminal device.

When the authentication result is that the authentication fails, the communication method 500 further includes step S506c.

S506c: The relay terminal device releases the link between the relay terminal device and the remote terminal device.

For a specific implementation of step S506c, refer to existing protocols. Details are not described herein. When the data network fails to authenticate the remote terminal device, the relay terminal device releases the link between the relay terminal device and the remote terminal device in time, so that transmission resources can be saved.

Based on the foregoing solution, the relay terminal device directly indicates the first network element, or the first network element and the relay terminal device determine, based on a same basis, whether the authentication of the data network needs to be performed on the remote terminal device, so that there is no conflict between determining results of the relay terminal device and the first network element. In other words, when the relay terminal device determines that the remote terminal device is pending authentication by the data network, and indicates the remote terminal device to avoid sending the data, the first network element may also determine that the authentication of the data network is required, to trigger the authentication of the data network, so that the remote terminal device starts to send the data in time after the authentication succeeds, or releases the link in time after the authentication fails. This prevents the remote terminal device from waiting indefinitely, and can improve communication efficiency of the remote terminal device.

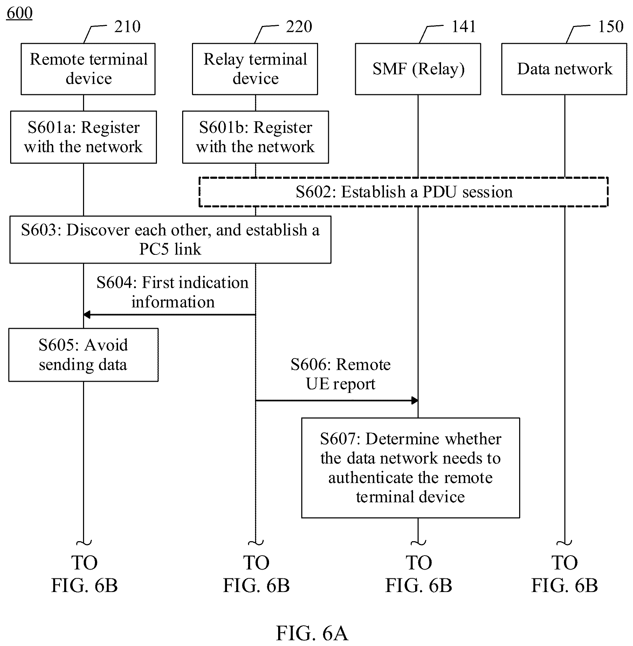

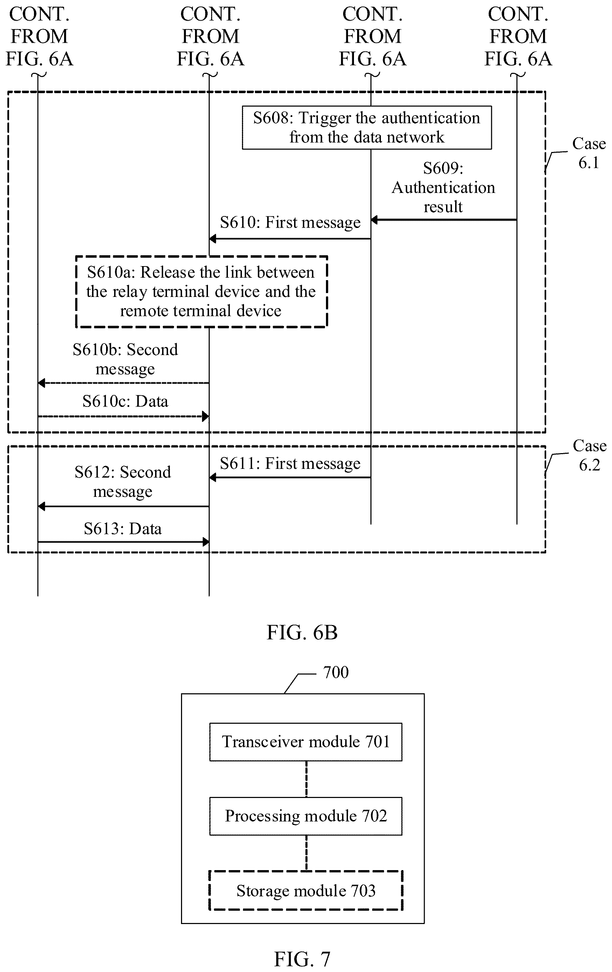

FIG. 6A and FIG. 6B are a schematic flowchart of yet another communication method 600 according to an embodiment of this application. The method may be applied to the network architecture shown in FIG. 2. The communication method 600 is a possible implementation of the communication method 300. A first network element is a session management function SMF (Relay) network element 141 corresponding to a relay terminal device, namely, an SMF (Relay) network element 141 configured to manage a PDU session associated with the relay terminal device, and the relay terminal device and the SMF (Relay) separately determine whether a data network needs to authenticate a remote terminal device. The following describes the method 600 by using an example with reference to steps in FIG. 6A and FIG. 6B. For a part that is not described in detail, refer to the communication method 300.

S601: The relay terminal device and the remote terminal device register with the network, where the network separately authorizes the relay terminal device and the remote terminal device.

Step S601 includes S601a and S601b in FIG. 6A.

S602: The relay terminal device establishes the PDU session used for relay.

It should be noted that, step S602 is optional.

S603: The relay terminal device and the remote terminal device discover each other and establish a link.

The relay terminal device and the remote terminal device perform mutual discovery by utilizing an RSC, so that the relay terminal device can provide, for the remote terminal device, a relay service corresponding to the RSC, that is, the remote terminal device can access, via the relay terminal device, a data network corresponding to the RSC, that is, the data network corresponding to the RSC may provide a business for the remote terminal device via the relay terminal device.

Optionally, if the relay terminal device has not established the PDU session used for relay, the relay terminal device triggers a PDU session establishment procedure. Alternatively, if the established PDU session used for relay does not meet the link between the relay terminal device and the remote terminal device, the relay terminal device triggers a PDU session establishment procedure or a PDU session modification procedure. Therefore, the relay terminal device has a PDU session that can be used for communication between the remote terminal device and the data network.

For other implementation details of steps S601 to S603, refer to existing protocols. Details are not described herein.

S604: When the relay terminal device determines that the data network needs to perform the authentication (namely, secondary authentication) on the remote terminal device, the relay terminal device sends first indication information to the remote terminal device.

The first indication information may indicate that the secondary authentication is to be performed on the PDU session, or may indicate that the PDU session is suspending/pending (pending), or may indicate the PDU session to be suspending and wait for the secondary authentication, or may indicate that the remote terminal device is pending authentication by the data network, or may also indicate the remote terminal device to avoid sending data. The PDU session is the PDU session in step S602 or S603.

Optionally, the first indication information is included in a DCA message, or included in a new message, or the relay terminal device directly sends the first indication information to the remote terminal device. Optionally, the relay terminal device may send the first indication information to the remote terminal device through a user plane or a control plane.

It should be noted that, herein, that the relay terminal device determines that the remote terminal device is pending authentication by the data network is merely preliminary determining, and does not mean that the authentication of the data network is definitely performed on the remote terminal device subsequently.

S605: The remote terminal device avoids, based on the first indication information, sending the data on the link between the remote terminal device and the relay terminal device.

It may also be understood that the remote terminal device avoids, based on the first indication information, sending the data to the relay terminal device, that is, avoids sending the data to the data network, where the data is user plane data.

S606: The relay terminal device sends a remote UE report to the SMF (Relay).

The remote UE report includes identity information of the remote terminal device, for example, a 5GPRUK ID of the remote terminal device.

Optionally, the relay terminal device directly or indirectly sends the remote UE report to the SMF (Relay). For example, the relay terminal device sends the remote UE report to the SMF (Relay) through an AMF (Relay).

S607: The SMF (Relay) determines whether the data network needs to authenticate the remote terminal device.

Optionally, the SMF (Relay) determines, based on subscription data of the remote terminal device, whether the data network needs to authenticate the remote terminal device. For example, the subscription data of the remote terminal device includes a second field and a third field. When the second field indicates that the data network does not need to authenticate the remote terminal device, or when the second field indicates that the data network needs to authenticate the remote terminal device, but the third field indicates that the data network has authenticated the remote terminal device, the SMF (Relay) determines that the data network does not need to authenticate the remote terminal device in the current process, otherwise, the SMF (Relay) determines that the data network needs to authenticate the remote terminal device. Optionally, the SMF (Relay) may further determine, based on a local policy, whether the data network needs to authenticate the remote terminal device, or may determine, with reference to the subscription data of the remote terminal device and the local policy, whether the data network needs to authenticate the remote terminal device. This is not limited in embodiments of this application.

Optionally, after receiving the remote UE report, the SMF (Relay) obtains an SUPI of the remote terminal device based on the 5GPRUK ID, and obtains the subscription data of the remote terminal device from a UDM based on the SUPI. The following separately describes two cases in which the SMF (Relay) determines that the data network needs to authenticate the remote terminal device and determines that the data network does not need to authenticate the remote terminal device.

**Case 6.1:** The SMF (Relay) determines that the data network needs to authenticate the remote terminal device.

In this case, the method 600 further includes the following steps.

S608: The SMF (Relay) triggers the data network to authenticate the remote terminal device. S609: The SMF (Relay) receives an authentication result.

Optionally, the authentication result is from the data network that authenticates the remote terminal device, or an AAA server in the data network.

S610: The SMF (Relay) sends a first message to the relay terminal device.

**Case 6.1a:** The authentication result is that the authentication fails.

The first message indicates that the authentication of the data network fails. For example, the first message is a remote UE report acknowledgment message, and the first message includes an EAP failure message. In this case, the method 600 further includes the following step S610a.

S610a: The relay terminal device releases the link between the relay terminal device and the remote terminal device.

**Case 6.1b:** The authentication result is that the authentication succeeds.

The first message indicates that the authentication of the data network succeeds. For example, the first message is a remote UE report acknowledgment message, and the first message includes an EAP success message.

Alternatively, the first message indicates the relay terminal device to send a second message, or indicates the relay terminal device to trigger the remote terminal device to send the data, or may indicate that the remote terminal device may start to send the data. The first message may be explicitly indicated. For example, the first message includes first information, and the first information indicates the relay terminal device to trigger the remote terminal device to send the data, or indicates that the remote terminal device may start to send the data. Alternatively, the first message may be implicitly indicated. For example, after receiving the first message, the relay terminal device determines that the remote terminal device may be triggered to send the data, or determines that the second message may be sent to the remote terminal device.

In this case, the method 600 further includes the following steps S610b and S610c.

S610b: The relay terminal device sends the second message to the remote terminal device.

S610c: The remote terminal device starts to send the data.

For specific implementations of steps S610b and S610c, refer to steps S304 and S305. Details are not described herein again.

It should be noted that, in **Case 6.1a,** the method 600 includes steps S601 to S610 and step S610a, and in Case 6.1b, the method 600 includes steps S601 to S610, step S610b, and step S610c. **Case 6.2:** The SMF (Relay) determines that the data network does not need to authenticate the remote terminal device.

In this case, the method 600 further includes the following steps.

S611: The SMF (Relay) sends a first message to the relay terminal device.

The first message indicates that the data network does not need to authenticate the remote terminal device. In other words, the authentication of the data network is not required. Optionally, the first message includes first information, and the first information indicates that the data network does not need to authenticate the remote terminal device. In other words, the authentication of the data network is not required.

Alternatively, the first message indicates the relay terminal device to send a second message, or indicates the relay terminal device to trigger the remote terminal device to send the data, or may indicate that the remote terminal device may start to send the data. The first message may be explicitly indicated. For example, the first message includes the first information, and the first information indicates the relay terminal device to trigger the remote terminal device to send the data, or indicates that the remote terminal device may start to send the data. Alternatively, the first message may be implicitly indicated. For example, after receiving the first message, the relay terminal device determines that the remote terminal device may be triggered to send the data, or determines that the second message may be sent to the remote terminal device. For example, if the first message is a remote UE report acknowledgment message, and the remote UE report acknowledgment message does not include an authentication failure result, the relay terminal device determines that the second message may be sent to the remote terminal device.

Alternatively, the first message may explicitly or implicitly indicate that the remote terminal device may access the data network, or indicate that the remote terminal device is authorized to access the data network. Alternatively, if the third field in the subscription data of the remote terminal device indicates that the data network has authenticated the remote terminal device, the first message may also explicitly or implicitly indicate that the data network has authenticated the remote terminal device.

The first message may be an existing message. For example, the first message is the remote UE report acknowledgment message, or the first message may be a new message.

For example, the first message includes a first field, and the first field includes an authentication result and a cause value. The authentication result indicates that the authentication fails, and the cause value indicates that the authentication of the data network is not required.

S612: The relay terminal device sends the second message to the remote terminal device.

S613: The remote terminal device starts to send the data.

For specific implementations of steps S612 and S613, refer to steps S304 and S305. Details are not described herein again. It should be understood that, in Case 6.2, the method 600 includes steps S601 to S607 and steps S611 to S613.

Based on the foregoing solution, when the relay terminal device determines that the remote terminal device is pending authentication by the data network and indicates the remote terminal device not to send the data currently, but the SMF (Relay) determines that the authentication of the data network is not required or the authentication has been successfully completed, the remote terminal device may learn in time that the remote terminal device may start to send the data, so that communication efficiency of the remote terminal device is improved. In addition, when the authentication fails, the relay terminal device may release the link between the relay terminal device and the remote terminal device in time, to save transmission resources.

The foregoing describes in detail the communication method and system provided in embodiments of this application with reference to FIG. 1 to FIG. 6B. It may be understood that to implement the foregoing functions, the server needs to include corresponding hardware structures and/or software modules for performing the functions.

A person skilled in the art should be able to be aware that, in combination with the examples described in embodiments disclosed in this specification, units and algorithm steps can be implemented by hardware or a combination of hardware and computer software in this application. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

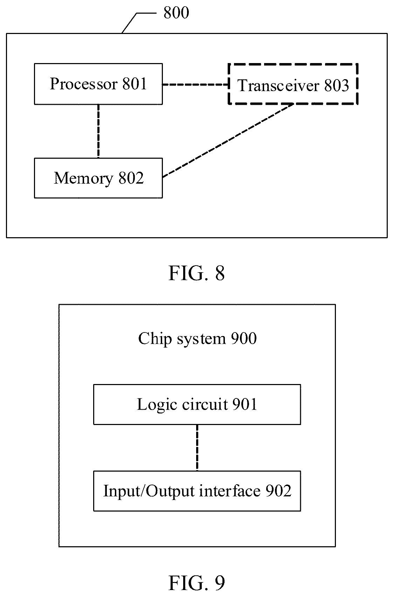

The following describes in detail the communication apparatus provided in this application with reference to FIG. 7 and FIG. 9. It should be understood that descriptions of apparatus embodiments correspond to the descriptions of the method embodiments. Therefore, for content that is not described in detail, refer to the foregoing method embodiments. For brevity, some content is not described again.

In embodiments of this application, the device may be divided into functional modules based on the foregoing method examples. For example, each functional module corresponding to each function may be obtained through division, or two or more functions may be integrated into one functional module. The foregoing modules may be implemented in a form of hardware, or may be implemented in a form of software functional module. It should be noted that, in embodiments of this application, module division is an example, and is merely a logical function division. In practice, another division manner may be used. An example in which each functional module is obtained through division based on each corresponding function is used below for description. FIG. 7 is a block diagram of a communication apparatus 700 according to an embodiment of this application. The apparatus 700 includes a transceiver module 701 and a processing module 702. The transceiver module 701 may implement a corresponding communication function. The processing module 702 is configured to perform data processing, or the transceiver module 701 is configured to perform operations related to receiving and sending. The processing module 702 is configured to perform an operation other than receiving and sending. The transceiver module 701 may also be referred to as a communication interface or a communication unit.

Optionally, the apparatus 700 may further include a storage module 703. The storage module 703 may be configured to store instructions and/or data. The processing module 702 may read the instructions and/or the data in the storage module, so that the apparatus implements actions of a device or a network element in the foregoing method embodiments.

In a design, the apparatus 700 may correspond to the relay terminal device in the foregoing method embodiments, or may be a component (for example, a chip) of the relay terminal device.

The apparatus 700 may implement steps or procedures performed by the relay terminal device in the foregoing method embodiments. The transceiver module 701 may be configured to perform a sending/receiving-related operation performed by the relay terminal device in the foregoing method embodiments. The processing module 702 may be configured to perform an internal processing-related operation performed by the relay terminal device in the foregoing method embodiments.

In a possible implementation, the transceiver module 701 is configured to send first indication information to a remote terminal device, where the first indication information indicates the remote terminal device to avoid sending data, the remote terminal device is pending authentication by a data network, and the data network is used to provide a service for the remote terminal device via the relay terminal device; and the transceiver module 701 is further configured to trigger the remote terminal device to send the data after receiving a first message, where the first message indicates that the authentication is not required, or the first message indicates that the authentication succeeds.

When the apparatus 700 is configured to perform the method in FIG. 3, the transceiver module 701 may be configured to perform steps of receiving and sending information in the method, for example, steps S301, S303, S304, and S305; and the processing module 702 may be configured to perform an internal processing step in the method.

When the apparatus 700 is configured to perform the method in FIG. 4, the transceiver module 701 may be configured to perform steps of receiving and sending information in the method, for example, steps S401 and S403b; and the processing module 702 may be configured to perform an internal processing step in the method.

When the apparatus 700 is configured to perform the method in FIG. 5, the transceiver module 701 may be configured to perform steps of receiving and sending information in the method, for example, steps S501, S503, S504, S506, S506a, S506b, and S506c; and the processing module 702 may be configured to perform an internal processing step in the method.

When the apparatus 700 is configured to perform the method in FIG. 6A and FIG. 6B, the transceiver module 701 may be configured to perform steps of receiving and sending information in the method, for example, steps S601b, S602, S603, S604, S606, S607, S608, and S609; and the processing module 702 may be configured to perform an internal processing step in the method. It should be understood that, for a specific process of performing the foregoing steps by each unit, refer to the descriptions of the foregoing embodiments. Details are not described herein again.

In another design, the apparatus 700 may correspond to the first network element in the foregoing method embodiments, or may be a component (for example, a chip) of the first network element. The apparatus 700 may implement steps or procedures performed by the first network element in the foregoing method embodiments. The transceiver module 701 may be configured to perform a sending/receiving-related operation performed by the first network element in the foregoing method embodiments. The processing module 702 may be configured to perform an internal processing-related operation performed by the first network element in the foregoing method embodiments.

In a possible implementation, the processing module 702 is configured to determine that a data network does not need to authenticate a remote terminal device, where the data network is used to provide a service for the remote terminal device via a relay terminal device corresponding to the first network element; and the transceiver module 701 is configured to send a first message to the relay terminal device, where the first message is used by the relay terminal device to trigger the remote terminal device to send data.

When the apparatus 700 is configured to perform the method in FIG. 5, the transceiver module 701 may be configured to perform steps of receiving and sending information in the method, for example, steps S503, S504, S505, and S506; and the processing module 702 may be configured to perform an internal processing step in the method.

When the apparatus 700 is configured to perform the method in FIG. 6A and FIG. 6B, the transceiver module 701 may be configured to perform steps of receiving and sending information in the method, for example, steps S602, S606, and S607; and the processing module 702 may be configured to perform an internal processing step in the method.

In another design, the apparatus 700 may correspond to the remote terminal device in the foregoing method embodiments, or may be a component (for example, a chip) of the remote terminal device. The apparatus 700 may implement steps or procedures performed by the remote terminal device in the foregoing method embodiments. The transceiver module 701 may be configured to perform a sending/receiving-related operation performed by the remote terminal device in the foregoing method embodiments. The processing module 702 may be configured to perform an internal processing-related operation performed by the remote terminal device in the foregoing method embodiments.

In a possible implementation, the transceiver module 701 is configured to receive first indication information. The processing module 702 is configured to avoid, based on the first indication information, sending data, where a data network is used to provide a service for the remote terminal device via a relay terminal device. The transceiver module 701 is configured to: determine that a first condition is met and then start to send the data.

When the apparatus 700 is configured to perform the method in FIG. 3, the transceiver module 701 may be configured to perform steps of receiving and sending information in the method, for example, steps S301, S304, and S305; and the processing module 702 may be configured to perform an internal processing step in the method, for example, step S302.

When the apparatus 700 is configured to perform the method in FIG. 4, the transceiver module 701 may be configured to perform steps of receiving and sending information in the method, for example, steps S401 and S403b; and the processing module 702 may be configured to perform internal processing steps in the method, for example, steps S402 and S403a.

When the apparatus 700 is configured to perform the method in FIG. 5, the transceiver module 701 may be configured to perform steps of receiving and sending information in the method, for example, steps S501, S504, S506a, and S506b; and the processing module 702 may be configured to perform an internal processing step in the method, for example, step S502.

When the apparatus 700 is configured to perform the method in FIG. 6A and FIG. 6B, the transceiver module 701 may be configured to perform steps of receiving and sending information in the method, for example, steps S601a, S603, S604, S608, and S609; and the processing module 702 may be configured to perform an internal processing step in the method, for example, step S605.

It should be understood that, for a specific process of performing the foregoing steps by each unit, refer to the descriptions of the foregoing embodiments. Details are not described herein again.

It should be further understood that the apparatus 700 herein is embodied in a form of functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, the transceiver module 701 may alternatively be a transceiver circuit (for example, may include a receiver circuit and a transmitter circuit), and the processing module 702 may be a processing circuit.

The apparatus 700 in the foregoing solutions has functions of implementing corresponding steps performed by the devices (for example, the relay terminal device, the remote terminal device, and the first network element) in the foregoing methods. The function may be implemented by hardware, or may be implemented by hardware executing corresponding software. The hardware or software includes one or more modules corresponding to the foregoing functions. For example, the transceiver module may be replaced with a transceiver (for example, a sending unit in the transceiver module may be replaced with a transmitter, and a receiving unit in the transceiver module may be replaced with a receiver), and another unit such as a processing module may be replaced with a processor, to separately perform a receiving and sending operation and a related processing operation in each method embodiment.

FIG. 8 is a diagram of another communication apparatus 800 according to an embodiment of this application. The apparatus 800 includes one or more processors 801 and one or more memories 802. The processor 801 is configured to: execute a computer program or instructions stored in the memory 802, or read data/signaling stored in the memory 802, to perform the methods in the foregoing method embodiments. The memory 802 is configured to store the computer program or the instructions and/or the data. The memory 802 and the processor 801 may be integrated together, or may be disposed separately.

Optionally, as shown in FIG. 8, the apparatus 800 further includes a transceiver 803, and the transceiver 803 is configured to receive and/or send a signal. For example, the processor 801 is configured to control the transceiver 803 to receive and/or send a signal.

In a solution, the apparatus 800 is configured to implement operations performed by the relay terminal device in the foregoing method embodiments.

In another solution, the apparatus 800 is configured to implement operations performed by the first network element in the foregoing method embodiments.

In still another solution, the apparatus 800 is configured to implement operations performed by the remote terminal device in the foregoing method embodiments.

It should be understood that the processor mentioned in embodiments of this application may be a central processing unit (central processing unit, CPU), or may alternatively be another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, another programmable logic device, a discrete gate or transistor logic device, or a discrete hardware component, the memory (storage module) may be integrated into the processor. It should further be noted that the memory described in this specification aims to include but is not limited to these memories and any memory of another proper type.

FIG. 9 is a diagram of a chip system 900 according to an embodiment of this application. The chip system 900 (also referred to as a processing system) includes a logic circuit 901 and an input/output interface (input/output interface) 902.

The logic circuit 901 may be a processing circuit in the chip system 900. The logic circuit 901 may be coupled and connected to a storage unit, and invoke instructions in the storage unit, so that the chip system 900 can implement methods and functions in embodiments of this application. The input/output interface 902 may be an input/output circuit in the chip system 900, and output information processed by the chip system 900, or input to-be-processed data or signaling information into the chip system 900 for processing.

In a solution, the chip system 900 is configured to implement operations performed by the relay terminal device or the first network element or the remote terminal device in the foregoing method embodiments. For example, the logic circuit 901 is configured to implement an internal processing-related operation performed by the relay terminal device, the first network element, or the remote terminal device in the foregoing method embodiments. The input/output interface 902 is configured to implement a sending and/or receiving-related operation performed by the relay terminal device, the first network element, or the remote terminal device in the foregoing method embodiments.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electrical form, a mechanical form, or another form.

An embodiment of this application further provides a communication system, including a first apparatus and a second apparatus. The first apparatus is configured to implement operations performed by the relay terminal device in the foregoing method embodiments, and the second apparatus is configured to implement operations performed by the remote terminal device in the foregoing method embodiments. Optionally, the communication system further includes a third apparatus, configured to implement operations performed by the first network element in the foregoing method embodiments.

An embodiment of this application further provides a computer-readable storage medium. The computer-readable storage medium stores computer instructions for implementing the methods performed by the relay terminal device, the first network element, or the remote terminal device in the foregoing method embodiments. For example, when the computer program is executed by a computer, the computer is caused to implement the method performed by the relay terminal device, the first network element, or the remote terminal device in the foregoing method embodiments.

All or a part of the foregoing embodiments may be implemented by using software, hardware, firmware, or any combination thereof. When software is used to implement embodiments, all or a part of embodiments may be implemented in a form of computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, for example, a USB flash disk, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

For ease of understanding embodiments of this application, the following descriptions are provided. First, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

Second, in embodiments of this application, "a plurality of' means two or more. "And/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" usually indicates an "or" relationship between the associated objects.

Third, in embodiments of this application, "first", "second", and various numerical numbers (for example, #1 and #2) indicate differentiation for ease of description, and are not intended to limit the scope of embodiments of this application, for example, are intended to distinguish between different messages but not to describe a specific order or sequence. It should be understood that objects described in this way are interchangeable in an appropriate circumstance, so that a solution other than embodiments of this application can be described.

Fourth, in embodiments of this application, descriptions such as "when...", "in a case of...", and "if" all mean that a device performs corresponding processing in an objective case, and are not intended to limit time. The descriptions do not necessarily mean that the device performs a determining action during implementation, and do not mean any other limitation.

Fifth, in embodiments of this application, the terms "include", "have", and any variants thereof are intended to cover non-exclusive inclusion. For example, a process, method, system, product, or device including a series of steps or units is not necessarily limited to those clearly listed steps or units, but may include other steps or units that are not clearly listed or are inherent to the process, method, product, or device.

Sixth, in embodiments of this application, "indicate" may include "directly indicate" and "indirectly indicate". When a piece of indication information indicates A, the indication information may directly indicate A or indirectly indicate A, but it does not indicate that the indication information definitely includes A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of these pieces of sub-information may be the same or may be different. An example sending method is not limited in embodiments of this application.

The "indication information" in embodiments of this application may be an explicit indication, to be specific, a direct indication by using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Seventh, in embodiments of this application, "storage" may mean storage in one or more memories. The one or more memories may be separately disposed, or may be integrated in an encoder, a decoder, a processor, or a communication apparatus. Alternatively, a part of the one or more memories may be separately disposed, and a part of the one or more memories are integrated into the translator, the processor, or the communication apparatus. A type of the memory may be a storage medium in any form. This is not limited in this application.

Eighth, in embodiments of this application, "communication" may also be described as "data transmission", "information transmission", "data processing", or the like. The "transmission" includes "sending" and "receiving". This is not limited in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a relay terminal device, first indication information to a remote terminal device, wherein the first indication information indicates the remote terminal device to avoid sending data, the remote terminal device is pending authentication by a data network, and the data network is used to provide a service for the remote terminal device via the relay terminal device; and
sending, by the relay terminal device, a second message to the remote terminal device after receiving a first message, wherein the second message is used to trigger the remote terminal device to send the data, and the first message indicates that the authentication is not required, or the first message indicates that the authentication succeeds.

2. The method according to claim 1, wherein before the sending, by the relay terminal device, the first indication information to the remote terminal device, the method further comprises:
determining, by the relay terminal device, that the remote terminal device is pending authentication by the data network.

3. The method according to claim 1 or 2, wherein the second message comprises second information; and
when the first message indicates that the authentication is not required, the second information indicates that the authentication is not required; or
when the first message indicates that the authentication succeeds, the second information indicates that the authentication succeeds.

4. The method according to any one of claims 1 to 3, wherein the first message comprises third information, and the third information indicates that the authentication is not required, or the third information indicates that the authentication succeeds.

5. The method according to any one of claims 2 to 4, wherein the determining, by the relay terminal device, that the remote terminal device is pending authentication by the data network comprises:
determining, by the relay terminal device based on a first service code associated with the data network, that the remote terminal device is pending authentication by the data network, wherein the first service code is marked as authentication required.

6. A communication method, comprising:
determining, by a first network element, that a data network does not need to perform authentication on a remote terminal device, wherein the data network is used to provide a service for the remote terminal device via a relay terminal device corresponding to the first network element; and
sending, by the first network element, a first message to the relay terminal device, wherein the first message is used to enable the relay terminal device to trigger the remote terminal device to send data.

7. The method according to claim 6, wherein the first message comprises indication information, and the indication information indicates that the authentication is not required.

8. A communication method, comprising:
receiving, by a remote terminal device, first indication information;
avoiding, by the remote terminal device based on the first indication information, sending data, wherein a data network is used to provide a service for the remote terminal device via a relay terminal device; and
starting, by the remote terminal device, to send the data after determining that a first condition is met.

9. The method according to claim 8, wherein the determining, by the remote terminal device, that the first condition is met comprises:
receiving, by the remote terminal device, a second message, wherein the second message indicates that the data network does not need to perform authentication on the remote terminal device, or the second message indicates that authentication performed by the data network on the remote terminal device succeeds.

10. The method according to claim 9, wherein the second message comprises second information, and the second information indicates that the authentication is not required, or the second information indicates that the authentication succeeds.

11. The method according to claim 8, wherein the first condition comprises:
duration between a current moment and a moment at which the remote terminal device receives the first indication information is greater than or equal to first duration.

12. The method according to claim 11, wherein the first condition further comprises:
authentication on the remote terminal device by the data network has not yet been performed after the remote terminal device receives the first indication information.

13. The method according to claim 11 or 12, wherein after the remote terminal device receives the first indication information, the method further comprises:
starting, by the remote terminal device, a timer, wherein duration of the timer is equal to the first duration; and
the determining, by the remote terminal device, that the first condition is met comprises:
determining, by the remote terminal device, that the timer expires.

14. The method according to claim 13, wherein before the starting, by the remote terminal device, the timer, the method further comprises:
determining, by the remote terminal device, whether the data network needs to perform authentication on the remote terminal device; and
the starting, by the remote terminal device, the timer comprises:
starting, by the remote terminal device, the timer when determining that the data network needs to perform the authentication on the remote terminal device.

15. The method according to claim 14, wherein the determining, by the remote terminal device, whether the data network needs to perform authentication on the remote terminal device comprises:
determining, by the remote terminal device based on configuration of the data network, whether the data network needs to perform the authentication on the remote terminal device.

16. The method according to claim 15, wherein the determining, by the remote terminal device based on the configuration of the data network, whether the data network needs to perform the authentication on the remote terminal device comprises:
when the configuration of the data network comprises a credential used for the authentication, determining, by the remote terminal device, that the data network needs to perform the authentication on the remote terminal device; or
when the configuration of the data network does not comprise a credential used for the authentication, determining, by the remote terminal device, that the data network does not need to perform the authentication on the remote terminal device.

17. The method according to any one of claims 12 to 16, wherein that the authentication on the remote terminal device by the data network has not yet been performed after the remote terminal device receives the first indication information comprises:
after the remote terminal device receives the first indication information, an authentication-related message has not yet been received by the remote terminal device.

18. The method according to claim 8, wherein the first condition comprises:
configuration of the data network does not comprise a credential, wherein the credential is used by the data network to perform authentication on the remote terminal device.

19. A communication method, comprising:
sending, by a relay terminal device, first indication information to a remote terminal device, wherein the remote terminal device is pending authentication by a data network, and the data network is used to provide a service for the remote terminal device via the relay terminal device;
avoiding, by the remote terminal device based on the first indication information, sending data;
sending, by the relay terminal device, a second message to the remote terminal device after receiving a first message, wherein the first message indicates that the authentication is not required, or the first message indicates that the authentication succeeds; and
sending, by the remote terminal device, the data based on the second message.

20. The method according to claim 19, wherein before the sending, by the relay terminal device, the first indication information to the remote terminal device, the method further comprises:
determining, by the relay terminal device, that the remote terminal device is pending authentication by the data network.

21. The method according to claim 19 or 20, wherein the second message comprises second information; and
when the first message indicates that the authentication is not required, the second information indicates that the authentication is not required; or
when the first message indicates that the authentication succeeds, the second information indicates that the authentication succeeds.

22. The method according to any one of claims 19 to 21, wherein the first message comprises third information, and the third information indicates that the authentication is not required, or the third information indicates that the authentication succeeds.

23. A communication apparatus, comprising a module configured to implement the method according to any one of claims 1 to 18.

24. A communication apparatus, comprising a processor and a memory, the memory is configured to store instructions, and when the instructions are executed by the processor, the processor is caused to implement the method according to any one of claims 1 to 18.

25. A computer-readable storage medium, wherein the computer-readable storage medium stores instructions, and when the instructions are run on a computer, the computer is caused to perform the method according to any one of claims 1 to 18.

26. A computer program product comprising instructions, wherein when the instructions are run on a computer, the computer is caused to perform the method according to any one of claims 1 to 18.

27. A communication system, comprising a first apparatus and a second apparatus, wherein
the first apparatus is configured to send first indication information to the second apparatus, wherein the second apparatus is pending authentication by a data network, and the data network is used to provide a service for the second apparatus via the first apparatus;
the second apparatus is configured to avoid, based on the first indication information, sending data;
the first apparatus is further configured to send a second message to the second apparatus after receiving a first message, wherein the first message indicates that the authentication is not required, or the first message indicates that the authentication succeeds; and
the second apparatus is further configured to send the data based on the second message.

28. The system according to claim 27, wherein before the sending the first indication information to the second apparatus, the first apparatus is further configured to:
determine that the second apparatus is pending authentication by the data network.

29. The system according to claim 27 or 28, wherein the second message comprises second information; and
when the first message indicates that the authentication is not required, the second information indicates that the authentication is not required; or
when the first message indicates that the authentication succeeds, the second information indicates that the authentication succeeds.

30. The system according to any one of claims 27 to 29, wherein the first message comprises third information, and the third information indicates that the authentication succeeds, or the third information indicates that the authentication is not required.
